# EUROPEAN PATENT APPLICATION

(11) **EP 1 568 726 A1**
(43) Date of publication of application: **31.08.2005**
(21) Application number: 05101111.2
(22) Date of filing: 15.02.2005
(51) Int. Cl.: C08G 65/08, C08G 65/14

(54) **Process for production of ethylene oxide copolymer**

(30) Priority: 27.02.2004 JP 2004054125
(71) Applicant: NIPPON SHOKUBAI CO., LTD., Osaka 541-0043 (JP); DAI-ICHI KOGYO SEIYAKU CO., LTD., Kyoto 600-8873 (JP)
(72) Inventor: Saeki, Koichiro, 565-0818, Osaka (JP); Takei, Kazuo, 564-0025, Osaka (JP); Kuriyama, Toshiaki, 210-0831, Kanagawa (JP); Yukitake, Masashi, 211-0042, Kanagawa (JP); Toba, Taketo, 665-0815, Hyogo (JP); Mizushima, Makoto, 564-0023, Osaka (JP); Kono, Michiyuki, 572-0082, Osaka (JP); Kikuta, Manabu, 610-0311, Kyoto (JP); Nishiura, Masahito, 663-8187, Hyogo (JP)
(74) Representative: Henkel, Feiler & Hänzel

(57) **Abstract**

An object of the present invention is to provide a process which can produce, easily and with good productivity and reproducibility, an ethylene oxide copolymer provided with desired compositional ratios of monomers and a desired molecular weight and further with a desired melting point. As a means of achieving this object, a process according to the present invention for production of an ethylene oxide copolymer is a process comprising a step of polymerizing a monomer mixture including ethylene oxide as a main component, thereby producing the ethylene oxide copolymer, with the process being characterized in that the polymerization step includes at least one step each of the following steps: a step in which only the ethylene oxide is supplied to thus polymerize it; and a step in which the ethylene oxide and another monomer are supplied to thus polymerize them.

## Description

### BACKGROUND OF THE INVENTION

### A. TECHNICAL FIELD

The present invention relates to a process for production of an ethylene oxide copolymer.

### B. BACKGROUND ART

Ethylene oxide is used for a monomer mixture for various polymer materials from the viewpoints of rich reactivity and high industrial utility of the ethylene oxide. An ethylene oxide copolymer being obtained by polymerizing a monomer mixture including ethylene oxide as a main component (e.g. refer to non-patent document 1 below) has hitherto been used as a polymer material for a very wide range of uses such as polyurethane resins (e.g. adhesives, paints, sealing agents, elastomers, floor agents), and besides, hard, soft, or semihard polyurethane resins, surfactants, sanitary products, deinking agents, lubricating oils, operating oils, and polymer electrolytes.

By the way, for the purpose of, as mentioned above, using the ethylene oxide copolymer as the useful polymer material, the ethylene oxide copolymer is usually required to have the optimum resin physical properties for each purpose and usage. Among such resin physical properties, those which are very high demanded for various uses are exemplified by such as molecular weights (weight-average molecular weight, number-average molecular weight), molecular weight distribution, compositional ratios of monomers (i.e. compositional ratios of various structural units derived from various monomers), and melting point.

Among these, the molecular weights, the molecular weight distribution, and the compositional ratios of monomers are easy also to design during the preparation and are therefore comparatively easy to adjust between them. However, the melting point itself of the polymer has hitherto been extremely difficult to control independently of the other physical properties (such as the molecular weights, the molecular weight distribution, and the compositional ratios of monomers). Its reasons are as follows. (i) It is known that the melting point of poly(ethylene oxide) depends generally on its molecular weight (e.g. refer to non-patent document 2 below) and, from this knowledge, it is inferred that the melting point of the ethylene oxide copolymer (in which structural units derived from ethylene oxide are contained as main structural units) also depends naturally on its molecular weight, so there are correlations between the melting point and the molecular weight at least. In addition, (ii) if an attempt is made to set the composition of various structural units at desired compositional ratios of monomers, then, accompanying it, the molecular weight of the polymer also varies inevitably, and therefore, after all, it has not yet been achieved to prepare an ethylene oxide copolymer provided with desired compositional ratios of monomers and a desired molecular weight and further with a desired melting point.

It is strongly desired to develop a process which can produce, easily and with good productivity and reproducibility, an ethylene oxide copolymer as a useful polymer material which, in the aforementioned enumerated various uses, exercises more excellent physical properties and a wider range of various physical properties and is more excellent in the handling property and the wide usability.

[Non-Patent Document 1] edited by Herman F. Mark, Norbert M. Bikales, Charles G. Overberger, and George Mengas, *"Encyclopedia of Polymer Science and Engineering".* Vol. 6 (USA), published by Wiley Interscience, published in 1986, p. 225-322

[Non-Patent Document 2] edited by F. W. Stone, J. J. Strada, and N. M. Bikales, *"Encyclopedia of Polymer Science and Technology",* published by Wiley Interscience, published in 1967, p. 120

### SUMMARY OF THE INVENTION

### A. OBJECT OF THE INVENTION

Thus, an object of the present invention is to provide a process which can produce, easily and with good productivity and reproducibility, an ethylene oxide copolymer provided with desired compositional ratios of monomers and a desired molecular weight and further with a desired melting point.

### B. DISCLOSURE OF THE INVENTION

The present inventors diligently studied to solve the above problems.

As a result, they have found out a novel process, involving a high technical inventive step, for production of an ethylene oxide copolyn3er such that: if a polymerization reaction, for obtaining the ethylene oxide copolymer, of a monomer mixture including ethylene oxide as a main component is provided with a step of polymerizing only the ethylene oxide and a step of polymerizing the ethylene oxide and another monomer (a monomer other than ethylene oxide), then desired compositional ratios of monomers and a desired molecular weight along the original design can be given to the resultant ethylene oxide copolymer and also its melting point can be adjusted to a desired value.

Specifically, the present inventors have found out that: if conditions are set so appropriately that the molecular structure of the resultant ethylene oxide copolymer can be provided with desired compositional ratios of monomers and a desired molecular weight as a whole but if it is arranged that a part of the above molecular structure should have a structural moiety consisting of structural units derived from ethylene oxide, then the melting point of the entire copolymer depends strongly on the above structural moiety. Furthermore, the present inventors have discovered that the melting point of the entire copolymer almost corresponds to that of a poly(ethylene oxide) corresponding to the size of the above structural moiety. Based on such knowledge and findings, the present inventors have found out that the melting point of the resultant copolymer can freely be adjusted by to what degree in the entire polymerization reaction the step of polymerizing only the ethylene oxide is carried out, in other words, in what degree of size it is arranged that the copolymer should have the structural moiety consisting of structural units derived from ethylene oxide.

The present inventors have completed the present invention by confirming that the above method can solve the above problems in a lump and easily.

That is to say, a process according to the present invention for production of an ethylene oxide copolymer is a process comprising a step of polymerizing a monomer mixture including ethylene oxide as a main component, thereby producing the ethylene oxide copolymer, with the process being characterized in that the polymerization step includes at least one step each of the following steps: a step in which only the ethylene oxide is supplied to thus polymerize it; and a step in which the ethylene oxide and another monomer are supplied to thus polymerize them.

### C. EFFECTS OF THE INVENTION

The present invention can provide a process which can produce, easily and with good productivity and reproducibility, an ethylene oxide copolymer provided with desired compositional ratios of monomers and a desired molecular weight and further with a desired melting point.

These and other objects and advantages of the present invention will be more fully apparent from the following detailed disclosure.

### DETAILED DESCRIPTION OF THE INVENTION

Hereinafter, detailed descriptions are given about the process according to the present invention for production of an ethylene oxide copolymer. However, the scope of the present invention is not bound to these descriptions. And other than the following illustrations can also be carried out in the form of appropriate modifications of the following illustrations within the scope not departing from the spirit of the present invention.

The production process according to the present invention is, as aforementioned, such that, in a process comprising a step of polymerizing a monomer mixture including ethylene oxide as a main component, thereby producing the ethylene oxide copolymer, it is arranged that the polymerization step should include at least one step each of the following steps: a step in which only the ethylene oxide is supplied to thus polymerize it; and a step in which the ethylene oxide and another monomer (a monomer other than ethylene oxide) are supplied to thus polymerize them.

Incidentally, in the present invention, polymerizing the monomer mixture is polymerizing at least one kind among monomers in the monomer mixture and is not limited to polymerizing all kinds of monomers, contained in the monomer mixture, at once (i.e. in a mixed state).

Hereinafter, descriptions are given about a general process for production of an ethylene oxide copolymer on the occasion of carrying out the present invention and further, in those descriptions, there are also described the characters of the present invention along with the above process.

In the production process according to the present invention, the monomer mixture in which ethylene oxide is contained as a main component and a monomer other than this ethylene oxide is also contained as an essential component is used as raw monomers for synthesis of the ethylene oxide copolymer, and this monomer mixture is polymerized.

The above other monomer is not limited. However, for example, such as substituted oxirane compounds are favorable. Favorable examples of the substituted oxirane compounds include compounds shown by the following structural formula (I): 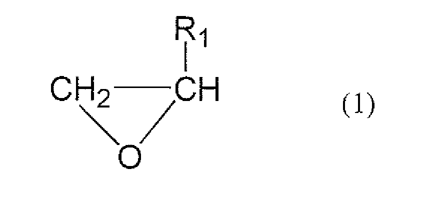 (wherein: R₁ is Ra (wherein Ra is any group of an alkyl group, a cycloalkyl group, an aryl group, an aralkyl group, a (meth)acryloyl group, and an alkenyl group having 1 to 16 carbon atoms) or a -CH₂-O-Re-Ra group (wherein Re has a structure of ―(CH₂―CH₂―O)ₚ― (wherein p is an integer of 0 to 10))).

The R₁ group in the structural formula (1) is a substituent in the substituted oxirane compound.

The substituted oxirane compound, being used as a raw monomer, may be only the substituted oxirane compound which can be shown by the structural formula (1), or may include another substituted oxirane compound.

Examples of the substituted oxirane compound shown by the structural formula (1) include propylene oxide, butylene oxide, 1,2-epoxypentane, 1,2-epoxyhexane, 1,2-epoxyoctane, cyclohexene oxide and styrene oxide, or methyl glycidyl ether, ethyl glycidyl ether, ethylene glycol methyl glycidyl ether. However, particularly in cases where the substituent R₁ is a crosslinkable substituent, examples thereof include epoxybutene, 3,4-epoxy-1-pentene, 1,2-epoxy-5,9-cyclododecadiene, 3,4-epoxy-1-vinylcyclohexene, 1,2-epoxy-5-cyclooctene, glycidyl acrylate, glycidyl methacrylate, glycidyl sorbate and glycidyl-4-hexanoate, or vinyl glycidyl ether, allyl glycidyl ether, 4-vinylcyclohexyl glycidyl ether, α-terpenyl glycidyl ether, cyclohexenylmethyl glycidyl ether, 4-vinylbenzyl glycidyl ether, 4-allylbenzyl glycidyl ether, ethylene glycol allyl glycidyl ether, ethylene glycol vinyl glycidyl ether, diethylene glycol allyl glycidyl ether, diethylene glycol vinyl glycidyl ether, triethylene glycol allyl glycidyl ether, triethylene glycol vinyl glycidyl ether, oligoethylene glycol allyl glycidyl ether and oligoethylene glycol vinyl glycidyl ether. Of these, only one kind may be used alone, or at least two kinds may be used in combinations with each other.

In the monomer mixture referred to in the present invention, another monomer besides the above ethylene oxide and substituted oxirane compound can also be contained as a raw monomer.

As the monomer mixture being used in the production process according to the present invention, particularly a combination of specific monomers is favorable in point of being able to easily adjust the melting point of the resultant copolymer in the below-mentioned desired range. Specifically, a monomer mixture including at least one of butylene oxide and allyl glycidyl ether along with ethylene oxide is favorable, and a monomer mixture including ethylene oxide and butylene oxide or including ethylene oxide, butylene oxide and allyl glycidyl ether is more favorable. Incidentally, though being within the range of inference and making no limitation, it can be considered that, if propylene oxide among the above other monomers is used, then there are cases where the chain transfer reaction makes it difficult to control the weight-average molecular weight of the polymer, and further that: glycidyl methacrylate has such high reactivity that, if this is used, then there are cases where unfavorably the polymerization reaction excessively proceeds to thus cause gelation.

In the production process according to the present invention, the amount of the entire monomer mixture being used may appropriately be set without limitation.. However, for example, it is favorably set so that, after the polymerization, the reaction system (reaction mixture) will satisfy the following range in content of the ethylene oxide copolymer (concentration of this copolymer) being obtained by the polymerization. Specifically, it is favorably arranged that, after the polymerization, the reaction mixture will be in the range of 10 to 80 weight %, more favorably 20 to 70 weight %, still more favorably 30 to 60 weight %, in the above content. If the above content is lower than 10 weight %, then there is a possibility of being low in productivity and therefore lacking the utility. If the above content is higher than 80 weight %, then there is a possibility that it may be impossible to produce the polymer easily and with good productivity and reproducibility, because the viscosity of the polymerization reaction liquid may rise to thus make the stirring difficult or because it may be difficult to remove the polymerization heat generated by the polymerization reaction. In addition, for arranging that the above content will satisfy the above range, it is favorable to use the below-mentioned nonpolar solvent as a reaction solvent for the polymerization, and therefrom, there can be obtained further effects such that: the nonpolar solvent has no reactivity to a polymerization initiator or an end of a growing polymer and therefore causes a side reaction little and makes it easy to control the molecular weight or melting point; and the water content of the solvent is easy to reduce to a predetermined amount and also to manage.

The formulation ratios of ethylene oxide and the aforementioned other monomers (particularly, substituted oxirane compounds) in the monomer mixture are not limited. They will do if they are set appropriately to such a degree that, after the polymerization, the viscosity of the reaction mixture can be prevented from lowering more than necessary and thus resulting in lacking the utility. In addition, in cases where the substituted oxirane compounds having a crosslinkable substituent are used, they can be used in any ratio to the amount of the entire substituted oxirane compounds being used.

In cases where the monomer mixture is the aforementioned combination of specific monomers, then, favorably in point of being able to still more easily adjust the melting point of the resultant copolymer in the below-mentioned desired range, the formulation ratio of each monomer is as follows: the ethylene oxide is in the range of 90 to 99 mol %, the butylene oxide is in the range of 1 to 10 mol %, and the allyl glycidyl ether is in the range of 0 to 2 mol %. Particularly, in cases where the monomer mixture includes ethylene oxide and butylene oxide, their formulation ratios are favorably as follows: the ethylene oxide is in the range of 92 to 96 mol %, and the butylene oxide is in the range of 4 to 8 mol %. In addition, in cases where the monomer mixture includes ethylene oxide, butylene oxide, and allyl glycidyl ether, their formulation ratios are favorably as follows: the ethylene oxide is in the range of 92 to 97.8 mol %, the butylene oxide is in the range of 2 to 6 mol %, and the allyl glycidyl ether is in the range of 0.2 to 2 mol %.

In the production process according to the present invention, it is favorable that, in order to obtain the ethylene oxide copolymer, the monomer mixture is polymerized while being stirred in a solvent.

Favorable examples of the method for the above polymerization include solution polymerization methods, precipitation polymerization methods, and solvent slurry polymerization methods. Above all, the solution polymerization methods and the solvent slurry polymerization methods are more favorable in point of being excellent in the productivity, and the solution polymerization methods in which the polymerization is carried out while the raw monomers are supplied to a beforehand charged solvent are particularly favorable in the following points of: the safety in such that the reaction heat is easy to remove; and being easy to intend to combine with the productivity in such that the polymerization concentration can easily be increased.

Though not limited, as the above solvent (reaction solvent), nonpolar solvents are favorable in point of having no reactivity to a polymerization initiator or an end of a growing polymer and therefore causing a side reaction little and making it easy to control the molecular weight or melting point, and further in point of the ease in reducing the water content of the solvent to a predetermined amount and also in managing this water content. Favorable examples thereof include organic solvents having no active hydrogen of such as a hydroxyl group, such as: aromatic hydrocarbon solvents (e.g. benzene, toluene, xylene, and ethylbenzene); aliphatic hydrocarbon solvents (e.g. heptane, octane, n-hexane, n-pentane, 2,2,4-trimethylpentane); alicyclic hydrocarbon solvents (e.g. cyclohexane, cyclopentane, methylcyclohexane); ether solvents (e.g. diethyl ether, dibutyl ether, methyl butyl ether); ethylene glycol dialkyl ether solvents (e.g. dimethoxyethane); and cyclic ether solvents (e.g. THF (tetrahydrofuran), dioxane). More favorable examples include toluene and xylene.

The production process according to the present invention is characterized in that it is arranged that the step of polymerizing the monomer mixture should include at least two steps, specifically at least one step each of the following steps: a step in which only the ethylene oxide is supplied to thus polymerize it (this step may hereinafter be referred to as "step (A)"); and a step in which the ethylene oxide and another monomer (a monomer other than ethylene oxide) are supplied to thus polymerize them (this step may hereinafter be referred to as "step (B)"). In the step (B), it is favorable that the ethylene oxide and the above other monomer are supplied as the monomer mixture after their compositional ratios have appropriately been set. However, there is no limitation to this mode. If necessary, it is also possible, for example, that a part of the entire supply steps of the step (B) are provided with a step of supplying only the above other monomer.

By providing the polymerization step with at least one step each of the steps (A) and (B), there can be obtained an ethylene oxide copolymer which has a molecular structure provided with: a homopolymer moiety (derived from the step (A)) consisting of structural units derived from ethylene oxide (this moiety may hereinafter be referred to simply as "homopolymer moiety"); and a copolymer moiety (derived from the step (B)) in which structural units derived from ethylene oxide and structural units derived from another monomer are mingled together (this moiety may hereinafter be referred to simply as "copolymer moiety").

In the present invention, as to specific modes of the polymerization step, if they are modes carried out in combination of at least one step each of the steps (A) and (B), then the number of times of each of the steps (A) and (B) or how to combine them is not limited. However, favorable examples thereof include: a mode in which there is carried out the step (A) followed by the step (B); a mode in which there is carried out the step (B) followed by the step (A); and a mode in which there is carried out the step (B) followed by the step (A), and then there is further carried out the step (B). Above all, in point of being able to easily solve the aforementioned problems, the mode in which there is carried out the step (A) followed by the step (B) and the mode in which there is carried out the step (B) followed by the step (A) are more favorable, and the mode in which the step (A) is first carried out is particularly favorable.

Hereinafter, detailed descriptions are given about the steps (A) and (B), including such as polymerization reaction conditions.

In the step (A), the aforementioned homopolymer moiety is synthesized by a polymerization reaction in which only the ethylene oxide is supplied to thus polymerize it.

In the production process according to the present invention, the ethylene oxide copolymer having a desired melting point can be obtained by appropriately controlling the size of this homopolymer moiety (the magnitude of the weight-average molecular weight as a homopolymer). As is previously mentioned, the melting point of the resultant ethylene oxide copolymer depends strongly on that of a poly(ethylene oxide) having a molecular weight corresponding to the size of this homopolymer moiety.

The supply amount of the ethylene oxide in the step (A) can be set appropriately with consideration given to the desired melting point of the resultant copolymer. However, it is favorable to appropriately set this supply amount after having arranged for it to satisfy the following upper and lower limit value ranges.

That is to say, as to the supply amount of the ethylene oxide in the step (A) (supply amount per one time of the step (A)), its lower limit value at least one time of all the times of carrying out the step (A) (if the step (A) is carried out only one time, then this one time) is favorably not smaller than 0.1 mol %, more favorably not smaller than 1 mol %, still more favorably not smaller than 3 mol %, relative to the total amount of the monomer mixture (total amount of the ethylene oxide and another monomer) being used for the polymerization. If this lower limit value is smaller than 0.1 mol %, then there is a possibility that, even if the size of the homopolymer moiety is adjusted, it may be impossible to adjust the melting point of the resultant entire ethylene oxide copolymer easily and with high precision and reproducibility. Similarly, the upper limit value of the above supply amount is favorably not larger than 60 mol %, more favorably not larger than 50 mol %, still more favorably not larger than 40 mol %, relative to the total amount of only the ethylene oxide in the monomer mixture being used for the polymerization. If this upper limit value is larger than 60 mol %, then there is a possibility that: the ratio for which the structural moiety derived from ethylene oxide accounts in the moiety (i.e. copolymer moiety) other than the homopolymer moiety in the structure of the resultant copolymer may be too small, thus resulting in failure to sufficiently exercise the desired physical properties of the copolymer (copolymer having the predetermined compositional ratios of monomers) as a whole. In the present invention, the step (A) being carried out in a way to satisfy the above supply amount range is involved in the melting point adjustment of the resultant copolymer and, by the size of the homopolymer moiety being synthesized in this step (A), the resultant copolymer is adjusted to a desired melting point. Incidentally, as to the above supply amount range, it is particularly favorable, in point of being able to easily adjust the resultant copolymer to a desired melting point, to arrange that, in cases where the mode in which the step (A) is first carried out (including both of a mode in which the step (A) is carried out only once and a mode in which the step (A) is carried out at least two times) is taken, the above supply amount range should be satisfied in this step (A) being first carried out, more favorably only in this step (A) being first carried out. In addition, if it is arranged that the above supply amount range should be satisfied at least one time of all the times of the step (A), then the supply amount (supply amount per one time of the step (A)) at the other times is not limited. It can appropriately be set.

In the step (B), the aforementioned copolymer moiety is synthesized by a polymerization reaction in which ethylene oxide other than is used in the step (A) and another monomer such as substituted oxirane compound are supplied to thus copolymerize them.

In the production process according to the present invention, the size of this copolymer moiety (the magnitude of the weight-average molecular weight as a copolymer) basically exercises no influence on the melting point of the resultant ethylene oxide copolymer. However, for example, depending on such as the compositional ratios of structural units derived from the monomers in the copolymer moiety and the ratio for which the copolymer moiety accounts in the resultant entire ethylene oxide copolymer, there are cases where the size of the copolymer moiety exercises an influence on the melting point of the resultant ethylene oxide copolymer in some degree. In such cases where the melting point of the resultant ethylene oxide copolymer cannot dominantly be controlled by only the aforementioned size of the homopolymer moiety, the ethylene oxide copolymer having a desired melting point can easily be obtained similarly to the cases of undergoing no influence from the copolymer moiety if the size of the homopolymer moiety is appropriately controlled in the step (A) with consideration beforehand given to the degree of the influence being undergone from the copolymer moiety.

The supply amount (total supply amount) of the ethylene oxide in the step (B) is an amount given by subtracting the entirety of the ethylene oxide being used in the above step (A) from the entirety of the ethylene oxide in the monomer mixture being used. In addition, the supply amount (total supply amount) of the other monomer in the step (B) is the entirety of the monomer other than ethylene oxide in the monomer mixture being used. In addition, the lower limit value of the total supply amount of the ethylene oxide and the other monomer per one time of the step (B) is not limited. It can appropriately be set.

In the production process according to the present invention, it is favorable to arrange that the size of the homopolymer moiety being synthesized in the step (A) should not be smaller than the size of the poly(ethylene oxide) moiety (polymer moiety such that only the structural units derived from ethylene oxide are linked together) in the copolymer moiety being synthesized in the step (B). If the above homopolymer moiety is smaller than the poly(ethylene oxide) moiety in the copolymer moiety, then there is a possibility that the melting point of the ethylene oxide copolymer cannot be adjusted by the size of the homopolymer moiety being synthesized in the step (A).

In cases where there is taken a way of carrying out the step (A) at least two times to thereby synthesize at least two homopolymer moieties different in size, then it basically follows that: the melting point of the ethylene oxide copolymer is adjusted by the size of the largest homopolymer moiety, and the other homopolymer moiety exercises no influence on the above melting point. However, for example, in cases such as where the size of the largest homopolymer moiety is near to that of the second largest (at least one) homopolymer moiety, then there are cases where the size of the latter homopolymer moiety exercises an influence on the melting point of the ethylene oxide copolymer in some degree. In such cases where the melting point of the resultant copolymer cannot dominantly be controlled by only the size of the largest homopolymer moiety, the copolymer having a desired melting point can easily be obtained similarly to the cases of undergoing no influence from the other homopolymer moiety if the size of the largest homopolymer moiety is appropriately controlled with consideration beforehand given to the size of the other laomopolymer moiety and the degree of the influence being undergone therefrom.

In addition, in cases where at least two poly(ethylene oxide) moieties different in size exist in the copolymer moiety synthesized by carrying out the step (B) one time or at least two times, then, as to the aforementioned comparison in size with the homopolymer moiety being synthesized in the step (A), the largest poly(ethylene oxide) moiety in the copolymer moiety is taken as the object of the above comparison.

In the production process according to the present invention, the operation is desirably carried out in a way that: after a sufficient conversion has been obtained in the polymerization reaction in the step (A) concerned in the aforementioned melting point adjustment, subsequently the transfer to the polymerization reaction of the step (B) is done, or the polymerization step is ended. Its reason is that: because, as aforementioned, the melting point of the resultant copolymer is adjusted by the size of the homopolymer moiety being synthesized in the step (A), there are cases where it is required that: after the polymerization reaction has been advanced to such a degree that the above homopolymer moiety can have a desired size, such as transfer to the next step should be done. Specifically, in the step (A), it is favorable that: after the conversion of the supplied ethylene oxide has reached not less than 50 %, more favorably not less than 60 %, still more favorably not less than 70 °/a, by appropriately considering and setting various conditions (e.g. concentration of ethylene oxide being supplied, reaction temperature, and reaction time), such as transfer to the next step is done. However, there is no limitation to this mode. For example, there may be taken a way that: after the end of the monomer supply in this step (A), sequentially thereto the transfer to the next step is done. Or there may be taken a way that: after the end of the monomer supply, the transfer to the next step is once stopped to complete the polymerization reaction in the above step (A) (so that the conversion of the ethylene oxide can reach 100 %) and then, (after an interval of time has been taken appropriately, if necessary) after the above completion, the transfer to the next step is done. Above all, in cases where the step (A) is carried out, it is more favorable that: as is mentioned above, after the conversion of the ethylene oxide has reached not less than the predetermined value or after the transfer has once been stopped to complete the polymerization reaction, the transfer to the next step is done. Furthermore, the latter case is particularly favorable in that the size of the homopolymer moiety can be controlled with a higher precision and, for this, the melting point of the resultant copolymer can closely be adjusted. Incidentally, depending on whether there is the above stop or not, it is necessary to appropriately adjust the supply amount of the ethylene oxide in the step (A) just before the above stop. However, cases of doing the above stop can suppress the supply amount of the ethylene oxide to a smaller one than cases of not doing the above stop.

In the cases of doing the above stop, the time of this stop can be set with appropriate consideration given to various conditions (e.g. concentration of ethylene oxide being supplied, reaction temperature, and reaction time). However, it is favorable to set the above time at such a length that it can take a sufficient time for the internal pressure of the reactor to reduce to a state at the beginning of the step (A) just before the above stop.

Also in the step (B), similarly, it is favorable that: after the conversion of the supplied monomer mixture has reached not less than 50 %, more favorably not less than 60 %, still more favorably not less than 70 %, by appropriately considering and setting various conditions (e.g. kind and concentration of monomer mixture being supplied, reaction temperature, and reaction time), such as transfer to the next step is done. However, there is no limitation to this mode. For example, there may be taken a way that: after the end of the monomer supply in this step (B), sequentially thereto the transfer to the next step is done. Or there may be taken a way that: after the end of the monomer supply, the transfer to the next step is once stopped to complete the polymerization reaction in the above step (B) (so that the conversion of the monomer mixture can reach 100 %) and then, (after an interval of time has been taken appropriately, if necessary) after the above completion, the transfer to the next step is done.

In the production process according to the present invention, it is permitted that: if necessary, such as reaction initiators (polymerization initiators), antioxidants, and solubilizing agents which have hitherto widely been used are added and used when the above polymerization is carried out. For example, in cases where such as antioxidants are added to the polymer and used for water-disliking uses (e.g. color filter protection membranes which need to have a low dielectric constant, polymer electrolytic layers of polymer batteries which need to have a high electric conductivity), then the water content is favorably not higher than 350 ppm, more favorably not higher than 300 ppm, still more favorably not higher than 200 ppm. If the above water content is higher than 350 ppm, then there is a possibility that there may occur the necessity to carry out a publicly known dehydratable means (including devolatilization) before the application to the above water-disliking uses, thus resulting in low economy and productivity.

As to the reaction initiator, the adjustment of its amount being used (added) enables the adjustment of the molecular weight of the resultant polymer. The amount of the reaction initiator being used will do if it is set so appropriately that the polymer having a desired molecular weight can be obtained. Thus, there is no limitation. However, for example, the above amount will do if it is set on the basis of the amount of the monomer mixture being charged. Specifically, for example, the above amount can be set in a way that the reaction initiator is used in an amount of not smaller than 1 µmol per 1 g of the amount of the monomer mixture being charged. However, there is no limitation thereto. Generally, in cases where a polymer having a high molecular weight is obtained, it is necessary that the amount of the reaction initiator being used is made small. However, if this amount is too small, then there are cases where: the progress of the polymerization reaction is extremely slow to thus result in damaging the productivity, or the polymerization reaction is extremely sensitive to the mingling of polymerization inhibition substances such as water in the reaction system and therefore does not proceed. In addition, for obtaining the polymer having a high molecular weight, it is, for example, important that: the amount of the reaction initiator being used is adjusted, and besides, the polymerization inhibition substances (e.g. water) and impurities are removed from the reaction system, or the reaction system is made such that the aforementioned chain transfer reaction is not caused.

Favorable examples of the reaction initiator include: alkaline catalysts (e.g. sodium hydroxide, potassium hydroxide, potassium alcoholates, sodium alcoholates, potassium carbonate, and sodium carbonate); metals (e.g. metal potassium and metal sodium); Al-Mg-containing composite oxide catalysts (e.g. JP-A-268919/1996 (Kokai)) (e.g. aluminum hydroxide-magnesium hydroxide-calcined products (e.g. JP-A-268919/1996 (Kokai)), metal-ion-added magnesium oxide (e.g. JP-B-015038/1994 (Kokoku), JP-A-227540/1995 (Kokai)), and calcined hydrotalcite (e.g. JP-A-071841/1990 (Kokai))); barium oxide, barium hydroxide (e.g. JP-A-033021/1984 (Kokai)); layered compounds (e.g. JP-A-505986/1994 (Kohyo)); strontium oxide, strontium hydroxide (e.g. JP-B-032055/1988 (Kokoku)); calcium compounds (e.g. JP-A-134336/1990 (Kokai)); cesium compounds (e.g. JP-A-070308/1995 (Kokai)); composite metal cyanide complexes (e.g. JP-A-339361/1993 (Kokai)); and acid catalysts (e.g. Lewis acids, Friedel-Crafts catalyst). However, there is no limitation thereto. Of these, only one kind may be used alone, or at least two kinds may be used in combinations with each other if necessary.

As to the method for adding the reaction initiator, for example, the entirety of the reaction initiator being used may beforehand be charged along with the solvent before the beginning of the supply of the monomer mixture, or the reaction initiator may be added in a lump or gradually (continuously and/or intermittently) after the beginning of the supply of the monomer mixture. Thus, there is no limitation.

In the production process according to the present invention, in cases where the monomer mixture is polymerized using the reaction initiator, it is favorable to appropriately adjust (e.g. reduce) the water content of the solvent in the reaction system. As the method for adjusting the water content of the solvent, favorable examples thereof include: physical methods in which the solvent is dehydrated by such as molecular sieve treatment and distillation purification; and methods by chemical reactions in which water is removed using a compound of high reactivity to water (e.g. metal sodium and alkylaluminums).

The kind of the polymerization reaction or mechanism in the aforementioned various polymerization methods (e.g. solution polymerization methods) is not limited. Favorable examples thereof include anionic polymerization, cationic polymerization, coordination polymerization, and immortal polymerization. Above all, the anionic polymerization is more favorable because a high-purity reaction initiator is industrially easily available and therefore the polymer can be obtained with good reproducibility and besides because the reaction initiator is so easy to handle that the molecular weight is comparatively easy to adjust.

In the production process according to the present invention, the reactor which is used in the polymerization will do if it is a hitherto publicly known reactor usable in cases of conventionally obtaining a polymer by a polymerization reaction. More favorable is a reactor which is excellent in such as heat resistance, chemical resistance, corrosion resistance, heat removability, and pressure resistance. However, its kind is not limited.

The reactor will do if it is such as can stir the contents (e.g. charged solvent, supplied monomer mixture). Favorable is such as is provided with stirring-blades and can stir the contents under desired conditions at will.

Favorable examples of the above stirring-blades include: stirring-tanks equipped with anchor blades; stirring-tanks equipped with helical ribbon blades; stirring-tanks equipped with double helical ribbon blades; stirring-tanks equipped with helical screw blades to which a draft tube is attached; vertical type concentric-twin-screw stirring-tanks (e.g. trade name: Super Blend, produced by Sumitomo Heavy Machine Industries, Ltd.) equipped with super-blending blades (inner blades: max-blending blades, outer blades: helical deformed baffle); stirring-tanks equipped with max-blending blades (produced by Sumitomo Heavy Machine Industries, Ltd.); stirring-tanks equipped with full zone blades (produced by Kobelco Eco-Solution Co., Ltd.); stirring-tanks equipped with super-mixing blades (produced by Satake Chemical Equipment Mfg, Ltd.); stirring-tanks equipped with Hi-F mixers (produced by Soken Chemical & Engineering Co., Ltd.); stirring-tanks equipped with SANMELER (trade name) blades (produced by Mitsubishi Heavy Industries, Ltd.); stirring-tanks equipped with LOGBORN (trade name) (produced by Kobelco Eco-Solution Co., Ltd.); stirring-tanks equipped with VCR (produced by Mitsubishi Heavy Industries, Ltd.); and stirring-tanks equipped with such as twisted lattice blades (produced by Hitachi Seisalcusho Co., Ltd.), turbine blades, paddle blades, Pfaudler blades, Brumargin blades, and propeller blades.

Favorable as the reactor is a reactor having equipment which can heat and maintain the charged contents so that they can be put under a desired reaction temperature. Favorable specific examples of the equipment which enables the above heating and maintaining include jackets, coils, and external circulating type heat exchangers. However, there is no limitation thereto.

The reactor can be equipped optionally with, besides the above equipment relating to such as stirring and heating, various and every other equipment (e.g.: detection edges such as baffles, thermometers, and pressure gauges; supply devices of uniformly dispersing raw materials into liquids or gas phases; devices for washing the inside of the reactor and reaction tank) for reasons of such as efficiently carrying out the polymerization reaction.

In the production process according to the present invention, it is favorable to use the reactor after having, in advance of the polymerization of the monomer mixture, washed the inside of the reactor with the above solvent and then heat-dried it and then either sufficiently displaced the internal air of the reactor ivith an inert gas or put the inside of the reactor in a vacuum state. Favorable examples of the inert gas include nitrogen gas, helium gas, and argon gas. It is favorable that the above solvent and inert gas are of high purity. For example, if water mingles, then there is a possibility of causing the polymerization inhibition or molecular weight reduction.. If oxygen mingles, then there is a possibility of extending the danger of explosion of ethylene oxide.

In the production process according to the present invention, it is favorable that: after such as the above washing, materials such as solvent are charged into the reactor in advance of the polymerization of the monomer mixture.

After the above charging of the materials such as solvent, it is favorable to, again, either displace the internal air of the reactor with an inert gas or put the inside of the reactor in a reduced (favorably, vacuum) state. In cases where the polymerization is carried out under an atmosphere displaced with the inert gas, it is favorable to arrange for the inert gas to be contained in not less than a definite ratio in the gas phase portion inside the reactor. Hereupon, it is favorable to simultaneously adjust the internal pressure (initial pressure) of the reactor with the inert gas. This internal pressure (initial pressure) of the reactor is not limited. It will do if it is adjusted appropriately to such a degree that the safety can be managed with consideration given to the amount of such as ethylene oxide existing in the reactor.

The polymerization reactions in the steps (A) and (B) in the production process according to the present invention are generally carried out while the monomer mixture is stirred along with such as solvent. As to this stirring, it is favorable to beforehand stir the contents (such as solvent) of the reactor by such as rotating the stirring-blades (equipped to the reactor) since before supplying the monomer mixture to the solvent. However, the stirring may be begun during the supply of the monomer mixture or at the beginning of this supply or at the beginning of the polymerization. Thus, the timing of the beginning of the stirring is not limited. In addition, it is favorable that the stirring is continued until the polymerization reaction comes to completion.

Generally, the stirring motive power refers to a value calculated as a motive power needed for the stirring which power is hitherto publicly known technical common sense, namely, a needed motive power per unit liquid amount of the contents of the reactor. In detail, it is, per unit liquid amount of the contents, a needed motive power calculated from such as the volume and viscosity of the contents, the shape of the reactor, and the shape and number of revolutions of the stirring-blades. Generally, the stirring motive power is specified so as to satisfy the above range as to the reaction product (which may hereinafter be referred to as reaction mixture) at the completion of the polymerization reaction. Therefore, it is not necessarily needed to secure such a stirring motive power as satisfies the above range throughout the entire reaction system from beginning to end (completion) of the polymerization reaction.

In order to arrange for the stirring motive power to satisfy the above range at the completion of the polymerization reaction, for example, it will do that: the number of the stirring-revolutions needed at the completion of the polymerization reaction is calculated from such as the viscosity and volume of the reaction mixture at the completion of the polymerization and the shape of the stirring-blades, and then the reaction is carried out while the calculated number of the stirring-revolutions is kept constant from beginning to end (completion) of the polymerization reaction. Hereupon, though not limited, the viscosity of the reaction product at the completion of the polymerization reaction is, for example, set in the range of 20 to 2,000,000 centipoises appropriately with consideration given to the kinds and amounts of the monomers being used (i.e. such as ethylene oxide and substituted oxirane compound), and then the above number of the stirring-revolutions can be calculated.

In the production process according to the present invention, it is favorable that the reaction temperature during the polymerization reactions in the steps (A) and (B) is appropriately adjusted and controlled, and it is more favorable that, similarly to the adjustment of the internal pressure of the reactor, the above reaction temperature is adjusted and controlled in advance before the monomer mixture is supplied to the solvent to begin the polymerization. Specifically, it is favorable that such as solvent charged into the reactor is beforehand controlled, in other words, what is called internal temperature is beforehand controlled, so as to be a desired reaction temperature. It is favorable that this control of the reaction temperature is carried out until the polymerization ends, including during the supply of the monomer mixture.

The above reaction temperature is favorably lower than 120 °C, more favorably not higher than 110 °C, still more favorably not higher than 100 °C. In addition, as to the above reaction temperature, even if it is constantly controlled, there are cases where there is no help for some error to be caused by influence of such as the kind of the temperature adjustment equipment and the temperature variation during the supply of the monomer mixture. However, if this error is within ±5 °C from the above favorable temperature range, then there can be obtained the same effects as of cases where there is no error. However, it is desirable that the temperature range which can be considered including the error range is defined as lower than 120 °C. If the above reaction temperature is out of the above temperature range, then various defects are caused as to the molecular weight of the resultant ethylene oxide copolymer. In detail, if the above reaction temperature is not lower than 120 °C, then the frequency of the chain transfer reaction is so large that the lowering of the molecular weight is easily caused and, in remarkable cases, the lowering of the molecular weight is caused to such a degree as cannot be controlled by adjusting the amount of the reaction initiator being added.

As to the above control of the reaction temperature, it is favorably carried out in a way to keep the reaction temperature constant until the end point of the polymerization reaction. However, as the case may be, or if necessary, in operational aspects of the reaction, it is also possible to vary the reaction temperature at will within the above temperature range. Though not limited, specific examples of this variation of the temperature control include such that: in cases where the monomer mixture is gradually supplied to thus polymerize it, the temperature is once set to thus control it at the stage of beginning the supply, but, because thereafter the internal temperature of the reaction system rises due to heat generation by the beginning of the polymerization reaction, thereafter the temperature as a result of this rise is taken as the setting temperature to thus control the temperature. Hereupon, to keep the reaction temperature constant shall be enough if the reaction temperature is controlled within the range of ±5 °C around a desired reaction temperature as the center of this range.

As to the above adjustment of the reaction temperature, the temperature of the charged contents of the reactor may be adjusted and controlled by such as heating the reactor, or the reaction temperature may be adjusted and controlled by such as directly heating the contents. Thus, there is no limitation. Favorable examples of the equipment which can adjust the reaction temperature include jackets, coils, and external circulating type heat exchangers which are widely used. However, there is no limitation thereto.

As is mentioned above, in the production process according to the present invention, it is favorable that: after having charged such as solvent into the reactor and adjusted and controlled such as stirring motive power and reaction temperature in the desired ranges, the monomer mixture of such as ethylene oxide and substituted oxirane compound is supplied to the solvent to thus carry out the polymerization reaction under stirring.

As to the supply of the monomer mixture to the solvent in the production process according to the present invention, both on the occasion when the step (A) is carried out and on the occasion when the step (B) is carried out, there may be carried out a mode that the entire monomer mixture being used is supplied by lump addition to thus polymerize it; or there may be carried out a mode that: the entire monomer mixture being used is divided into portions, and each of these portions is supplied by lump addition to thus polymerize it; or there may be carried out a mode that, while at least a part of the monomer mixture being used is supplied, the monomer mixture is polymerized. Thus, there is no limitation.

Examples of the mode that, while at least a part of the monomer mixture is supplied, the monomer mixture is polymerized include: a mode that: a part of the total amount of the monomer mixture being charged is beforehand supplied, as the initial supply amount (initial charge amount), to the solvent, and then, while the rest is supplied by gradual addition, the monomer mixture is polymerized; and a mode that: while the entirety of the monomer mixture is supplied by gradual addition without the beforehand supply to the solvent, the monomer mixture is polymerized.

The above gradual addition refers to continuous and/or intermittent supply (which may hereinafter be referred to as "continuous supply" and "intermittent supply" respectively), wherein the "continuous supply" is defined as referring to gradual addition such that the material is continuously supplied little by little, and wherein the "intermittent supply" is defined as referring to gradual addition such that the material is intermittently supplied with the charge amount divided into any number of times (e.g. 2 to 3 times). Cases where the continuous supply is carried out are more favorable in that the reaction temperature is easy to control at a desired one and at a constant one. As to this control of the reaction temperature, it is favorable to adjust the supply rate in accordance with such as the kind of the monomer mixture (such as ethylene oxide and substituted oxirane compound). In detail, the above supply rate is favorably adjusted with consideration given to such as the reaction rate of the monomer mixture being used and the heat removal ability and permissible pressure of the reactor being used. Incidentally, the continuous and/or intermittent supply is defined as including also a supply way in combination of the continuous supply and the intermittent supply such as is the intermittent supply as a whole but is the continuous supply during each intermittent supply.

In the production process according to the present invention, it is favorable to age the reaction mixture in the reactor after the end of the supply of the monomer mixture, if necessary. There is no limitation on conditions (e.g. temperature, time) in the aging. They can appropriately be set.

When the reactor is released from the pressure after the above supply or aging, there are cases where the solvent or unreacted raw monomers exist in the gas phase. Therefore, it is favorable to make their perfect combustion with waste gas combustion apparatus (e.g. combustion furnace, combustion catalyst), if necessary. In addition, heat being generated on this occasion can be recovered to thereby obtain steam (vapor).

In the production process according to the present invention, if necessary, after the above supply or aging, a solvent may further be added to the resultant ethylene oxide copolymer to thus dissolve and dilute it so that its viscosity will be a desired one. The solvent being used on this occasion is not limited. However, the solvent used in the above polymerization step is favorable. In addition, if necessary, such as various stabilizing agents (e.g. antioxidants) and solubilizing agents may be added along with the above solvent. Such as various stabilizing agents and solubilizing agents may be added either after having been mixed with the aforementioned solvent or separately therefrom. Thus there is no limitation.

The production process according to the present invention may comprise any other step besides various steps such as the step of supplying the monomer mixture to the solvent to thus polymerize the monomer mixture under stirring and the aging step of aging the reaction mixture obtained from the polymerization step. Thus there is no limitation. For example, the process may further comprise a step of, subsequently to the above polymerization step and the aging step (being carried out if necessary), volatilizing the solvent component from the resultant reaction mixture under heating to thus recover the ethylene oxide copolymer (what is called devolatilization step).

As the method for carrying out the devolatilization step, the device being used during the devolatilization, and various conditions during it, it will do to adopt such as hitherto publicly known methods, usable devices, and setting conditions which can conventionally be adopted on the occasion of carrying out the devolatilization treatment.

In the production process according to the present invention, the weight-average molecular weight (Mw) and molecular weight distribution (Mw/Mn) of the resultant ethylene oxide copolymer can be adjusted by appropriately setting such as the aforementioned various polymerization conditions so that the above weight-average molecular weight (Mw) and molecular weight distribution (Mw/Mn) win be desired values with consideration given to such as use purposes and within the range not resulting in greatly lacking the utility in such that the viscosity of the above copolymer is low more than necessary. For example, it is favorably arranged that the weight-average molecular weight (Mw) of the resultant copolymer should be in the range of 10,000 to 500,000, more favorably 30,000 to 300,000, still more favorably 40,000 to 200,000. If the above Mw is less than 10,000, then there is a possibility that the melting point of the resultant copolymer may unfavorably be so low that it cannot be adjusted in a desired range. If the above Mw is more than 500,000, then there is a possibility that the viscosity of the polymerization reaction liquid may rise so much that the stirring becomes difficult. In addition, it is favorably arranged that the molecular weight distribution (Mw/Mn) of the resultant copolymer should be in the range of 1.0 to 5.0, more favorably 1.0 to 3.0.

In the production process according to the present invention, the melting point of the resultant ethylene oxide copolymer is, as aforementioned, adjustable so as to be a desired value. For example, it is favorably arranged that the melting point of the resultant copolymer should be in the range of 30 to 60 °C, more favorably 35 to 55 °C. If the above melting point is lower than 30 °C, then there is a possibility that, for example, in such as uses in which the polymer is used in a filmy form, this filmy form cannot be retained at use temperatures. If the above melting point is higher than 60 °C, then there is a possibility that: for example, in such as uses in which the polymer is used in a filmy form, it may become a film of low softness (brittle and of low strength) at use temperatures or, for example, in cases where the polymer is used in uses for which the electric conductivity is needed, the electric conductivity may be low during the use.

In the production process according to the present invention, it is favorably arranged that the elongational viscosity of the resultant ethylene oxide copolymer should satisfy a specific range under conditions of a predetermined shear speed. Specifically, in cases where the shear speed is in the range of 100 to 10,000 (1/second), it is favorably arranged that the above elongational viscosity should be in the range of 10 to 10,000,000 Pa·s. Furthermore, in cases where the shear speed is in the range of 100 to 500 (1/second), it is favorably arranged that the above elongational viscosity should be in the range of 100 to 1,000,000 Pa·s, more favorably 500 to 500,000 Pa·s, still more favorably 1,000 to 100,000 Pa·s. If the above elongational viscosity is lower than the above range, then there is a possibility that, for example, in such as uses in which the polymer is used in a filmy form, when the polymer is molded into a filmy form the polymer may unfavorably be broken even by a slight tension while melting. If the above elongational viscosity is higher than the above range, then there is a possibility that, for example, in such as uses in which the polymer is used in a filmy form, when the polymer is extrusion-molded into a filmy form the torque is so high that the extrusion cannot be carried out. Incidentally, generally, the above shear speed is in the range of 100 to 500 (1/second) in the extrusion molding and in the range of 1,000 to 10,000 (1/second) in the injection molding.

In the production process according to the present invention, it is favorably arranged that both the melting point and elongational viscosity of the resultant ethylene oxide copolymer should satisfy the above ranges. In such cases, it is possible to easily intend a combination such that: for example, in such as uses in which the polymer is used in a filmy form, when the polymer is extrusion-molded into a filmy form the polymer is prevented from being broken even by a slight tension while melting and the torque can be maintained so that the extrusion can be carried out. In addition, the film obtained by the extrusion molding becomes in its use temperature range a film which is high in shape retention ability and in strength and excellent in softness and flexibility. Furthermore, for example, in cases where the polymer is used in uses for which the electric conductivity is needed, the above film obtained by the extrusion molding becomes a film which is particularly excellent in the electric conductivity during the use.

Though not limited, the ethylene oxide copolymer obtained by the production process according to the present invention is, for example, favorably usable as a polymer material useful in a wide range of uses such as polyurethane resins (e.g. adhesives, paints, sealing agents, elastomers, floor agents), and besides, hard, soft, or semihard polyurethane resins, and further, surfactants, sanitary products, deinking agents, lubricating oils, operating liquids, polymer electrolytes (e.g. color filter protection membranes which need to have a low dielectric constant, polymer electrolytic layers of polymer batteries which need to have a high electric conductivity), and flexographic printing plate materials which need to have flexibility.

### DETAILED DESCRIPTION OF THE PREFERRED EMBODIMENTS

Hereinafter, the present invention is more specifically illustrated by the following Examples of some preferred embodiments. However, the present invention is not limited to these Examples. Incidentally, hereinafter, for convenience, the unit "weight part(s)" may be referred to simply as "part(s)", the unit "hour(s)" may be referred to simply as "h", and the unit "liter(s)" may be referred to simply as "L". In addition, the "weight" may be referred to as "wt" (for example, the unit "weight %" may be referred to as "wt %", and the "weight/weight" may be referred to as "wt/wt").

The conditions of various measurements, settings, and treatments in the Examples and the Comparative Examples are shown below.

### <Dehydration treatment with molecular sieve>:

A molecular sieve was added in an amount of 10 wt % to the solvent (e.g. toluene) and various monomers to be dehydrated and dried, and then the atmosphere was displaced with nitrogen. Incidentally the molecular sieve being used was product name: Molecular Sieve (type: 4A 1.6) produced by Union Shoiva Co., Ltd.

### <Measurement of weight-average molecular weight (Mw) and molecular weight distribution (Mw/Mn)>:

These were measured with a GPC device of which the calibration curve had been prepared from a standard molecular weight sample of the poly(ethylene oxide). This measurement was carried out after the resultant reaction mixture (containing the resultant polymer) had been dissolved into a predetermined solvent after the polymerization reaction.

### <Thermal analysis: measurement of melting point and crystallization temperature>:

A differential thermal analyzer was used to the melting point of the polymer in the following temperature pattern. The polymer which was used as the sample was prepared by, after the polymerization reaction, drying the resultant reaction mixture (containing the resultant polymer) at 80 °C with a reduced-pressure drier for 2 hours to thereby remove volatiles from the reaction mixture and then moisture-conditioning the residue under a dry nitrogen flow for not less than 10 hours.

Temperature pattern: The crystallization temperature (Tc (°C)) was determined from the peak of heat generation involved by crystallization occurring when, in the analyzer (produced by Seiko Electronic Industries, Ltd., product name: Thermal Analyzer "DSC 220"), the polymer was cooled from 80 °C to -100 °C at -5 °C/min after having been rapidly heated to 80 °C to thus be once melted. Furthermore, the temperature at which the crystal entirely melted when the crystallized polymer was heated from -100 °C to 80 °C at 5 °C/min was determined as the melting point (Tm (°C)) of the polymer.

### <Measurement of elongational viscosity>:

After the polymerization reaction, the resultant reaction mixture (containing the resultant polymer) was dried at 100 °C with a reduced-pressure drier for 8 hours to thereby remove volatiles from the reaction mixture and then cut into the form of pellets and then left in a glove box (nitrogen atmosphere) for 24 hours to thus reduce the volatiles content finally to not higher than 200 ppm, thus obtaining a sample polymer. The elongational viscosity (1/second) of the polymer was measured under the following conditions:
Measurement device: produced by ROSAND, device name: Twin Capillary Rheometer "RH7-2 Model"
Measurement temperature: 100 to 110 °C
Dies: a long die of 2 mm in diameter (32 mm in length) and a short die of 2 mm in diameter (0.25 mm in length)
Die angle: 180°
Measurement atmosphere: dry air atmosphere
Retention time: 10 minutes
Cautions when charging into dies: The charging of the polymer should be carried out quickly (within 5 minutes). Defoaming operation should be carried out (after the charging of the polymer, the defoaming inside the barrel should be carried out sufficiently with a piston or an intruding bar).

### [Referential Example 1]:

A reactor of 1 L, as equipped with max-blending blades (produced by Sumitomo Heavy Machine Industries, Ltd.) and an addition inlet, was washed with a solvent (toluene) and then heat-dried, and then internal air of the reactor was displaced with nitrogen. Into this reactor, there were charged 286.5 parts of toluene (having been subjected to the dehydration treatment with the molecular sieve) and 0.55 part of potassium t-butoxide (20 wt % tetrahydrofuran solution) (as a reaction initiator) in that order. After this charging, internal air of the reactor was displaced with nitrogen. The pressure was increased with nitrogen until the internal pressure of the reactor became 0.3 MPa. The temperature was raised with an oil bath under stirring by rotating the ma_{Y}-blending blades at I30 rpm.

After it had been confirmed that the internal temperature of the reactor had become 90 °C, ethylene oxide and a monomer mixture of butylene oxide and allyl glycidyl ether (having been subjected to the dehydration treatment with the molecular sieve) (butylene oxide/allyl glycidyl ether = 17 parts/14.5 parts) began to be supplied at a supply rate of 51 parts/h as to the ethylene oxide and at a supply rate of 6.3 parts/h as to the monomer mixture, each of which was rationed for 2.5 hours. Since after 2.5 hours from the above beginning of the supply, each of the ethylene oxide and the monomer mixture was rationed at a supply rate of 25.5 parts/h as to the ethylene oxide and at a supply rate of 3.15 parts/h as to the monomer mixture for another 5 hours (supply amount of the ethylene oxide: total 255 parts, supply amount of the monomer mixture: total 31.5 parts). While the rise of the internal temperature and pressure due to polymerization heat was monitored and controlled during the above supply, the reaction was carried out at 100±5 °C.

After the end of the supply, the reaction system was further retained at not lower than 90 °C for 5 hours to thus age it.

By the above operation, there was obtained a reaction mixture containing a polymer of 107,000 in weight-average molecular weight Mw.

### [Example 1]:

A reaction mixture containing a polymer of 125,000 in weight-average molecular weight Mw was obtained by carrying out a polymerization reaction in the same way as of Referential Example 1 except that the conditions for supplying the monomer mixture of butylene oxide and allyl glycidyl ether were changed as follows:

### «Supply conditions»:

After 15 minutes from the beginning of the supply of the ethylene oxide, the monomer mixture of butylene oxide and allyl glycidyl ether (butylene oxide/allyl glycidyl ether = 17 parts/14.5 parts) began to be supplied at a supply rate of 7 parts/h and was rationed for 2.25 hours since then. Since after 2.5 hours from the beginning of the supply of the ethylene oxide, the monomer mixture was rationed at a supply rate of 3.15 parts/h for another 5 hours (supply amount of the ethylene oxide: total 255 parts, supply amount of the monomer mixture: total 31.5 parts).

### [Example 2]:

A reaction mixture containing a polymer of 106,000 in weight-average molecular weight Mw was obtained by carrying out a polymerization reaction in the same way as of Referential Example 1 except that the conditions for supplying the monomer mixture of butylene oxide and allyl glycidyl ether were changed as follows:

### «Supply conditions»:

After 30 minutes from the beginning of the supply of the ethylene oxide, the monomer mixture of butylene oxide and allyl glycidyl ether (butylene oxide/allyl glycidyl ether = 17 parts/14.5 parts) began to be supplied at a supply rate of 7.9 parts/h and was rationed for 2 hours since then. Since after 2.5 hours from the beginning of the supply of the ethylene oxide, the monomer mixture was rationed at a supply rate of 3.15 parts/h for another 5 hours (supply amount of the ethylene oxide: total 255 parts, supply amount of the monomer mixture: total 31.5 parts).

### [Example 3]:

A reaction mixture containing a polymer of 123,000 in weight-average molecular weight Mw was obtained by carrying out a polymerization reaction in the same way as of Referential Example 1 except that the conditions for supplying the monomer mixture of butylene oxide and allyl glycidyl ether were changed as follows:

### «Supply conditions»:

After 45 minutes from the beginning of the supply of the ethylene oxide, the monomer mixture of butylene oxide and allyl glycidyl ether (butylene oxide/allyl glycidyl ether = 17 parts/14.5 parts) began to be supplied at a supply rate of 9 parts/h and was rationed for 1.75 hours since then. Since after 2.5 hours from the beginning of the supply of the ethylene oxide, the monomer mixture was rationed at a supply rate of 3.15 parts/h for another 5 hours (supply amount of the ethylene oxide: total 255 parts, supply amount of the monomer mixture: total 31.5 parts).

### [Example 4]:

A reaction mixture containing a polymer of 104,000 in weight-average molecular weight Mw was obtained as a result of carrying out a polymerization reaction in the same way as of Example 2 except that the composition of the monomer mixture of butylene oxide and allyl glycidyl ether was changed to butylene oxide/allyl glycidyl ether = 13 parts/18.5 parts.

### [Example 5]:

A reaction mixture containing a polymer of 30,000 in weight-average molecular weight Mw was obtained as a result of carrying out a polymerization reaction in the same way as of Example 2 except that the amount of the potassium t-butoxide (20 wt % tetrahydrofuran solution) (as a reaction initiator) was changed to 2.71 parts.

### [Example 6]:

A reaction mixture containing a polymer of 177,000 in weight-average molecular weight Mw was obtained as a result of carrying out a polymerization reaction in the same way as of Example 2 except that: the amount of the potassium t-butoxide (20 wt % tetrahydrofuran solution) (as a reaction initiator) was changed to 0.3 part, the reaction beginning temperature was changed to 80 °C, and the reaction maintaining temperature was changed to 85 °C.

### [Example 7]:

A reaction mixture containing a polymer of 206,000 in weight-average molecular weight Mw was obtained as a result of carrying out a polymerization reaction in the same way as of Example 2 except that: the amount of the potassium t-butoxide (20 wt % tetrahydrofuran solution) (as a reaction initiator) was changed to 0.2 part, the reaction beginning temperature was changed to 80 °C, and the reaction maintaining temperature was changed to 85 °C.

### [Example 8]:

A reaction mixture containing a polymer of 106,000 in weight-average molecular weight Mw was obtained by carrying out a polymerization reaction in the same way as of Referential Example 1 except that the conditions for supplying the monomer mixture of butylene oxide and allyl glycidyl ether and the conditions for supplying the ethylene oxide were changed as follows:

### «Supply conditions»:

Before supplying the ethylene oxide, first the monomer mixture of butylene oxide and allyl glycidyl ether (butylene oxide/allyl glycidyl ether = 17 parts/14.5 parts) began to be supplied at a supply rate of 6.5 parts/h and was rationed for 20 minutes. Thereafter all the monomer supplies were once stopped for 60 minutes. After the above stop, ethylene oxide began to be supplied at a supply rate of 51 parts/h and was rationed for 2.5 hours. Thereafter, this supply rate was changed to 25.5 parts/h to thus ration ethylene oxide for another 5 hours (supply amount of the ethylene oxide: total 255 parts). After 30 minutes from the beginning of the supply of the ethylene oxide, the above monomer mixture of butylene oxide and allyl glycidyl ether began to be supplied at a supply rate of 6.5 parts/h again and was rationed for 2 hours since then. Thereafter, this supply rate was changed to 3.5 parts/h to thus ration the monomer mixture for another 5 hours (supply amount of the monomer mixture in these 7 hours: total 30.5 parts).

### [Example 9]:

In Example 1, after 15 minutes from the beginning of the supply of the ethylene oxide, all the monomer supplies were stopped and the stirring was continued until the internal temperature and pressure of the reactor stabilized. After 30 minutes from the above supply stop, it was confirmed that the above temperature and pressure was stable. Thereafter, each of the ethylene oxide and the monomer mixture was rationed at a supply rate of 51 parts/h as to the ethylene oxide and at a supply rate of 7 parts/h as to the monomer mixture for 2.25 hours. Thereafter, each of the ethylene oxide and the monomer mixture was rationed at a supply rate of 25.5 parts/h as to the ethylene oxide and at a supply rate of 3.15 parts/h as to the monomer mixture for another 5 hours (supply amount of the ethylene oxide: total 255 parts, supply amount of the monomer mixture: total 31.5 parts). While the rise of the internal temperature and pressure due to polymerization heat was monitored and controlled during the above supply, the reaction was carried out at 100±5 °C.

After the end of the supply, the reaction system was further retained at not lower than 90 °C for 5 hours to thus age it.

By the above operation, there was obtained a reaction mixture containing a polymer of 115,000 in weight-average molecular weight Mw.

### [Example 10]:

A reaction mixture containing a polymer of 125,000 in weight-average molecular weight Mw was obtained by carrying out a polymerization reaction in the same way as of Example 9 except that: after 30 minutes from the beginning of the supply of the ethylene oxide, all the monomer supplies were stopped and, after 35 minutes from this supply stop, it was confirmed that the above temperature and pressure was stable, and thereafter the supplies were carried out under the following conditions:

### «Supply conditions»:

Each of the ethylene oxide and the monomer mixture was rationed at a supply rate of 51 parts/h as to the ethylene oxide and at a supply rate of 7.9 parts/h as to the monomer mixture for 2 hours. Thereafter, each of the ethylene oxide and the monomer mixture was rationed at a supply rate of 25.5 parts/h as to the ethylene oxide and at a supply rate of 3.15 parts/h as to the monomer mixture for another 5 hours (supply amount of the ethylene oxide: total 255 parts, supply amount of the monomer mixture: total 31.5 parts).

### [Example 11]:

A reaction mixture containing a polymer of 121,000 in weight-average molecular weight Mw was obtained by carrying out a polymerization reaction in the same way as of Example 9 except that: after 20 minutes from the beginning of the supply of the ethylene oxide, all the monomer supplies were stopped and, after 30 minutes from this supply stop, it was confirmed that the above temperature and pressure was stable, and thereafter the supplies were carried out under the following conditions:

### «Supply conditions»:

Each of the ethylene oxide and the monomer mixture was rationed at a supply rate of 51 parts/h as to the ethylene oxide and at a supply rate of 7.3 parts/h as to the monomer mixture for 2 hours. Thereafter, each of the ethylene oxide and the monomer mixture was rationed at a supply rate of 25.5 parts/h as to the ethylene oxide and at a supply rate of 3.15 parts/h as to the monomer mixture for another 5 hours (supply amount of the ethylene oxide: total 255 parts, supply amount of the monomer mixture: total 31.5 parts).

### [Example 12]:

A reactor of 1 L, as equipped with max-blending blades (produced by Sumitomo Heavy Machine Industries, Ltd.) and an addition inlet, was washed with a solvent (toluene) and then heat-dried, and then internal air of the reactor was displaced with nitrogen. Into this reactor, there were charged 286.5 parts of toluene (having been subjected to the dehydration treatment with the molecular sieve) and 0.55 part of potassium t-butoxide (20 wt % tetrahydrofuran solution) (as a reaction initiator) in that order. After this charging, internal air of the reactor was displaced with nitrogen. The pressure was increased with nitrogen until the internal pressure of the reactor became 0.3 MPa. The temperature was raised with an oil bath under stirring by rotating the max-blending blades at 130 rpm.

After it had been confirmed that the internal temperature of the reactor had become 90 °C, ethylene oxide began to be supplied at a supply rate of 55 parts/h and was rationed for 2.5 hours. Since after 30 minutes from the beginning of the supply of the ethylene oxide, allyl glycidyl ether (having been subjected to the dehydration treatment with the molecular sieve) was rationed at a supply rate of 2.6 parts/h for 2 hours. Since after 2.5 hours from the beginning of the supply of the ethylene oxide, each of the ethylene oxide and the allyl glycidyl ether was rationed at a supply rate of 27.5 parts/h as to the ethylene oxide and at a supply rate of 1.05 parts/h as to the allyl glycidyl ether for another 5 hours (supply amount of the ethylene oxide: total 275 parts, supply amount of the allyl glycidyl ether: total 10.5 parts). While the rise of the internal temperature and pressure due to polymerization heat was monitored and controlled during the above supply, the reaction was carried out at 10015 °C.

After the end of the supply, the reaction system was further retained at not lower than 90 °C for 5 hours to thus age it.

By the above operation, there was obtained a reaction mixture containing a polymer of 140,000 in weight-average molecular weight Mw.

### [Example 13]:

A reactor of 1 L, as equipped with max-blending blades (produced by Sumitomo Heavy Machine Industries, Ltd.) and an addition inlet, was washed with a solvent (toluene) and then heat-dried, and then internal air of the reactor was displaced with nitrogen. Into this reactor, there were charged 286.5 parts of toluene (having been subjected to the dehydration treatment with the molecular sieve) and 0.55 part of potassium t-butoxide (20 wt % tetrahydrofuran solution) (as a reaction initiator) in that order. After this charging, internal air of the reactor was displaced with nitrogen. The pressure was increased with nitrogen until the internal pressure of the reactor became 0.3 MPa. The temperature was raised with an oil bath under stirring by rotating the max-blending blades at 130 rpm.

After it had been confirmed that the internal temperature of the reactor had become 90 °C, ethylene oxide began to be supplied at a supply rate of 51 parts/h and was rationed for 2.5 hours. After 30 minutes from the beginning of the supply of the ethylene oxide, a monomer mixture of butylene oxide and allyl glycidyl ether (having been subjected to the dehydration treatment with the molecular sieve) (butylene oxide/allyl glycidyl ether = 26 parts/5.5 parts) began to be supplied at a supply rate of 7.9 parts/h and was rationed for 2 hours since then. Since after 2.5 hours from the above beginning of the supply of the ethylene oxide, each of the ethylene oxide and the monomer mixture was rationed at a supply rate af 25.5 parts/h as to the ethylene oxide and at a supply rate of 3.15 parts/h as to the monomer mixture for another 5 hours (supply amount of the ethylene oxide: total 255 parts, supply amount of the monomer mixture: total 31.5 parts). While the rise of the internal temperature and pressure due to polymerization heat was monitored and controlled during the above supply, the reaction was carried out at 100±5 °C.

After the end of the supply, the reaction system was further retained at not lower than 90 °C for 5 hours to thus age it.

By the above operation, there was obtained a reaction mixture containing a polymer of 136,000 in weight-average molecular weight Mw.

### [Example 14]:

A reactor of 1 L, as equipped with max-blending blades (produced by Sumitomo Heavy Machine Industries, Ltd.) and an addition inlet, was washed with a solvent (toluene) and then heat-dried, and then internal air of the reactor was displaced with nitrogen. Into this reactor, there were charged 286.5 parts of toluene (having been subjected to the dehydration treatment with the molecular sieve) and 0.6 part of potassium t-butoxide (20 wt % tetrahydrofuran solution) (as a reaction initiator) in that order. After this charging, internal air of the reactor was displaced with nitrogen. The pressure was increased with nitrogen until the internal pressure of the reactor became 0.3 MPa. The temperature was raised with an oil bath under stirring by rotating the max-blending blades at 130 rpm.

After it had been confirmed that the internal temperature of the reactor had become 90 °C, ethylene oxide began to be supplied at a supply rate of 51 parts/h and was rationed for 2 hours. Since after I5 minutes from the beginning of the supply of the ethylene oxide, butylene oxide (having been subjected to the dehydration treatment with the molecular sieve) was rationed at a supply rate of 9 parts/h for 1.75 hours. Since after 2 hours from the beginning of the supply of the ethylene oxide, each of the ethylene oxide and the butylene oxide was rationed at a supply rate of 24.9 parts/h for another 6 hours as to the ethylene oxide and at a supply rate of 6.5 parts/h for another 3 hours as to the butylene oxide (supply amount of the ethylene oxide: total 251.5 parts, supply amount of the butylene oxide: total 35 parts). While the rise of the internal temperature and pressure due to polymerization heat was monitored and controlled during the above supply, the reaction was carried out at 100±5 °C.

After the end of the supply, the reaction system was further retained at not lower than 90 °C for 5 hours to thus age it.

By the above operation, there was obtained a reaction mixture containing a polymer of 117,000 in weight-average molecular weight Mw.

### [Example 15]:

A reaction mixture containing a polymer of 123,000 in weight-average molecular weight Mw was obtained by carrying out a polymerization reaction in the same way as of Example 14 except that the conditions for supplying the butylene oxide (having been subjected to the dehydration treatment) were changed as follows:

### «Supply conditions»:

After 30 minutes from the beginning of the supply of the ethylene oxide, the butylene oxide began to be supplied at a supply rate of 9 parts/h and was rationed for 1.5 hours since then. Since after 2 hours from the beginning of the supply of the ethylene oxide, the butylene oxide was rationed at a supply rate of 7.2 parts/h for another 3 hours (supply amount of the ethylene oxide: total 251.5 parts, supply amount of the butylene oxide: total 35 parts).

### [Example 16]:

A reaction mixture containing a polymer of 111,000 in weight-average molecular weight Mw was obtained by carrying out a polymerization reaction in the same way as of Example 14 except that the conditions for supplying the butylene oxide (having been subjected to the dehydration treatment) were changed as follows:

### «Supply conditions»:

After 45 minutes from the beginning of the supply of the ethylene oxide, the butylene oxide began to be supplied at a supply rate of 9 parts/h and was rationed for 1.25 hours since then. Since after 2 hours from the beginning of the supply of the ethylene oxide, the butylene oxide was rationed at a supply rate of 8 parts/h for another 3 hours (supply amount of the ethylene oxide: total 251.5 parts, supply amount of the butylene oxide: total 35 parts).

### [Example 17]:

An amount of 1,710 parts of solvent (toluene) was charged into a reactor of 1 L as equipped with max-blending blades (produced by Sumitomo Heavy Machine Industries, Ltd.) and an addition inlet. The solvent was stirred at 70 °C for 3 hours to wash the inside of the reactor therewith. Thereafter, the solvent was extracted, and then the reactor was heat-dried, and then internal air of the reactor was displaced with nitrogen by carrying out displacement operation with nitrogen (0.5 MPa) 3 times. Into this reactor, there were charged 850 parts of toluene (water content: not higher than 20 ppm) (having been subjected to the dehydration treatment with the molecular sieve) and 1.99 parts of potassium t-butoxide (20 wt % tetrahydrofuran solution) (as a reaction initiator) in that order. After this charging, while the contents of the reactor were stirred by rotating the max-blending blades at 90 rpm, internal air of the reactor was displaced with nitrogen. The pressure was increased with nitrogen until the internal pressure of the reactor became 0.3 MPa. The temperature was raised by passing a warm water flow through the jacket.

After it had been confirmed that the internal temperature of the reactor had become 94 °C, ethylene oxide began to be supplied at a supply rate of 160.8 parts/h and was rationed for 2.5 hours. After 30 minutes from the beginning of the supply of the ethylene oxide, a monomer mixture of butylene oxide and allyl glycidyl ether (having been subjected to the dehydration treatment with the molecular sieve) (butylene oxide/allyl glycidyl ether = 8 parts/3 parts, water content: not higher than 800 ppm) began to be supplied at a supply rate of 24.9 parts/h and was rationed for 2 hours since then. Since after 2.5 hours from the above beginning of the supply of the ethylene oxide, each of the ethylene oxide and the monomer mixture was rationed at a supply rate of 80.4 parts/h as to the ethylene oxide and at a supply rate of 9.9 parts/h as to the monomer mixture for another 5 hours (supply amount of the ethylene oxide: total 804 parts, supply amount of the monomer mixture: total 99.3 parts). While the rise of the internal temperature and pressure due to polymerization heat was monitored and controlled during the above supply, the reaction was carried out at 100±5 °C.

After the end of the supply, the reaction system was further retained at 100±5 °C for 3 hours to thus age it.

By the above operation, there was obtained a reaction mixture containing a polymer of 97,000 in weight-average molecular weight Mw, 3,700 Pa·s in elongational viscosity (shear speed: 500 (1/second), 100 °C), and 49 °C in melting point.

### [Example 18]:

An amount of 1,710 parts of solvent (toluene) was charged into a reactor of 1 L as equipped with max-blending blades (produced by Sumitomo Heavy Machine Industries, Ltd.) and an addition inlet. The solvent was stirred at 70 °C for 3 hours to wash the inside of the reactor therewith. Thereafter, the solvent was extracted, and then the reactor was heat-dried, and then internal air of the reactor was displaced with nitrogen by carrying out displacement operation with nitrogen (0.5 MPa) 3 times. Into this reactor, there were charged 94t parts of toluene (water content: not higher than 20 ppm) (having been subjected to the dehydration treatment with the molecular sieve) and 1.79 parts of potassium t-butoxide (20 wt % tetrahydrofuran solution) (as a reaction initiator) in that order. After this charging, while the contents of the reactor were stirred by rotating the max-blending blades at 90 rpm, internal air of the reactor was displaced with nitrogen. The pressure was increased with nitrogen until the internal pressure of the reactor became 0.3 MPa. The temperature was raised by passing a warm water flow through the jacket.

After it had been confirmed that the internal temperature of the reactor had become 90 °C, ethylene oxide began to be supplied at a supply rate of 220.2 parts/h and was rationed for 40 minutes. After 20 minutes from the beginning of the supply of the ethylene oxide, butylene oxide (having been subjected to the dehydration treatment with the molecular sieve) (water content: not higher than 400 ppm) began to be supplied at a supply rate of 48.9 parts/h and was rationed for 20 minutes since then. Since after 40 minutes from the above beginning of the supply of the ethylene oxide, each of the ethylene oxide and the butylene oxide was rationed at a supply rate of 146.4 parts/h as to the ethylene oxide and at a supply rate of 32.6 parts/h as to the butylene oxide for another 1 hour. Since after 1 hour and 40 minutes from the above beginning of the supply of the ethylene oxide, each of the ethylene oxide and the butylene oxide was rationed at a supply rate of 109.8 parts/h as to the ethylene oxide and at a supply rate of 24.48 parts/h as to the butylene oxide for another 1 hour and 20 minutes. Since after 3 hours from the above beginning of the supply of the ethylene oxide, the ethylene oxide was rationed at a supply rate of 73.2 parts/h for another 2 hours. Since after 5 hours from the above beginning of the supply of the ethylene oxide, the ethylene oxide was rationed at a supply rate of 58.8 parts/h for another 2.5 hours (supply amount of the ethylene oxide: total 733 parts, supply amount of the butylene oxide: total 81.4 parts). While the rise of the internal temperature and pressure due to polymerization heat was monitored and controlled during the above supply, the reaction was carried out at 100±5 °C.

After the end of the supply, the reaction system was further retained at 100±5 °C for 2 hours to thus age it.

By the above operation, there was obtained a reaction mixture containing a polymer of 121,000 in weight-average molecular weight Mw, 6,400 Pa·s in elongational viscosity (shear speed: 500 (1/second), 100 °C), and 49 °C in melting point.

The polymers in the reaction mixtures having been obtained from Referential Example 1 and Examples 1 to 16 were measured by the molecular weight distribution (Mw/Mn), the melting point (Tm (°C)), and the crystallization temperature (Tc (°C)) in the aforementioned ways. Their results are shown in Table 1.

**Table 1**

| | Weight-average molecular weight Mw | Molecular weight distribution Mw/Mn | Melting point Tm (°C) | Crystallization temperature Tc (°C) |
|---|---|---|---|---|
| Referential Example 1 | 107,000 | 1.55 | 36.1 | 14.7 |
| Example 1 | 125,000 | 1.69 | 44.9 | 24.1 |
| Example 2 | 106,000 | 1.61 | 48.0 | 22.3 |
| Example 3 | 123,000 | 1.54 | 49.9 | 22.3 |
| Example 4 | 104,000 | 1.50 | 43.6 | 16.6 |
| Example 5 | 30,000 | 1.30 | 44.2 | 19.8 |
| Example 6 | 177,000 | 1.57 | 44.9 | 23.5 |
| Example 7 | 206,000 | 1.30 | 47.4 | 26.6 |
| Example 8 | 106,000 | 1.63 | 49.9 | 17.2 |
| Example 9 | 115,000 | 1.67 | 51.7 | 23.9 |
| Example 10 | 125,000 | 1.52 | 46.4 | 22.7 |
| Example 11 | 121,000 | 1.57 | 46.9 | 20.6 |
| Example 12 | 140,000 | 1.69 | 49.2 | 29.4 |
| Example 13 | 136,000 | 1.61 | 45.6 | 16.0 |
| Example 14 | 117,000 | 1.21 | 42.4 | 16.0 |
| Example 15 | 123,000 | 1.27 | 44.3 | 18.3 |
| Example 16 | 111,000 | 1.31 | 48.6 | 21.6 |

### INDUSTRIAL APPLICATION

The production process according to the present invention is, for example, favorably usable as a process for production of an ethylene oxide copolymer which is used as a polymer material for a very wide range of uses such as polyurethane resins (e.g. adhesives, paints, sealing agents, elastomers, floor agents), and besides, hard, soft, or semihard polyurethane resins, surfactants, sanitary products, deinking agents, lubricating oils, operating oils, and polymer electrolytes.

Various details of the invention may be changed without departing from its spirit not its scope. Furthermore, the foregoing description of the preferred embodiments according to the present invention is provided for the purpose of illustration only, and not for the purpose of limiting the invention as defined by the appended claims and their equivalents.

## Claims

1. A process for production of an ethylene oxide copolymer, which is a process comprising a step of polymerizing a monomer mixture including ethylene oxide as a main component, thereby producing the ethylene oxide copolymer,
with the process being **characterized in that** the polymerization step includes at least one step each of the following steps: a step in which only the ethylene oxide is supplied to thus polymerize it; and a step in which the ethylene oxide and another monomer are supplied to thus polymerize them.

2. A process according to claim 1 for production of an ethylene oxide copolymer, wherein: a nonpolar solvent is used as a reaction solvent for the polymerization; and it is arranged that, after the polymerization, the reaction system will be in the range of 10 to 80 weight % in content of the ethylene oxide copolymer obtained by the polymerization.

3. A process according to claim 1 or 2 for production of an ethylene oxide copolymer, wherein it is arranged that the ethylene oxide copolymer obtained by the polymerization should have a melting point of 30 to 60 °C and have an elongational viscosity of 100 to 1,000,000 Pa·s under a shear speed of 100 to 500 (1/second).

4. A process according to any one of claims 1 to 3 for production of an ethylene oxide copolymer, wherein:
the monomer mixture includes ethylene oxide and butylene oxide or includes ethylene oxide, butylene oxide, and allyl glycidyl ether; and
their formulation ratios are as follows: the ethylene oxide is in the range of 90 to 99 mol %, the butylene oxide is in the range of 1 to 10 mol %, and the allyl glycidyl ether is in the range of 0 to 2 mol %.
